# FASCICULE DE BREVET EUROPEEN

(11) **EP 0 771 897 B1**
(45) Date de publication et mention de la délivrance du brevet: **28.03.2001**
(21) Numéro de dépôt: 96490040.1
(22) Date de dépôt: 24.10.1996
(51) Int. Cl.: D06B 23/20, D06B 3/26

(54) **Machine de traitement, notamment textile, comprenant une cuve amovible et une borne technique fixe**
Maschine zur Behandlung von insbesondere Textilien mit einem auswechselbaren Behälter und einer ortsfesten technischen Einheit
Machine for treating in particular textiles comprising an interchangeable tank and a fixed technical unit

(30) Priorité: 30.10.1995 FR 9513048
(43) Date de publication de la demande: 07.05.1997
(73) Titulaire: S.A. des Etablissements C. Burel, 59150 Wattrelos (FR)
(72) Inventeur: Volpi, Sylvain L., 59310 Landas (FR)
(74) Mandataire: Hénnion, Jean-Claude

(56) Documents cités:
- EP-A- 0 126 042
- DE-C- 4 305 438
- FR-A- 2 691 722

## Description

La présente invention concerne une machine de traitement dans laquelle est amené à circuler un ou plusieurs fluides de traitement dans des conditions prédéterminées en particulier de temps et de température. La présente invention concerne notamment une machine de traitement textile dans laquelle un matériau textile est mis en contact avec un bain de traitement, par exemple un bain de teinture. Il peut s'agir notamment d'une machine dénommée barque dans laquelle le matériau textile à traiter se présente sous la forme d'une boucle sans fin qui se déplace continûment dans le bain de traitement grâce à un organe de déplacement, généralement dénommé tourniquet.

Toute machine de traitement comporte une cuve, des moyens d'alimentation d'élévation, de refroidissement et d'évacuation du fluide de traitement, des éventuels moyens de circulation du fluide de traitement à l'intérieur de la cuve, des moyens de contrôle, ainsi que des moyens de commande générale de la machine. S'agissant plus particulièrement d'une machine de traitement textile dans laquelle la matière est déplacée, une dite machine comporte également un organe de déplacement entraîné par tout moyen approprié. Il est à noter que tous les moyens précités, relatifs au fluide de traitement, se trouvant en périphérie de la cuve occupent une place de plus en plus importante et représentent en valeur relative la part la plus coûteuse de la machine.

De manière générale la cuve de traitement constitue le corps principal de la machine et tous les autres moyens sont soit contenus dans la cuve proprement dite, soit disposés en périphérie de celle-ci, de manière à permettre le fonctionnement approprié de la machine en fonction de sa destination.

Cette structure connue des machines de traitement présente, selon le demandeur, un inconvénient majeur qui est de ne pas permettre une bonne adaptation en fonction des paramètres de chaque traitement. Par exemple dans le cas d'un traitement textile la capacité de la cuve de traitement détermine le volume des matières qui peuvent être traitées dans la machine. L'ennoblisseur textile doit donc posséder un parc important de machines de traitement de manière à répondre efficacement à la demande. Ce problème est accentué lorsque l'ennoblisseur est amené à traiter des lots de matière très diversifiés.

Dans le cas où la quantité de matière à traiter est nettement inférieure à la capacité normale de la machine, l'ennoblisseur doit mettre en oeuvre un rapport de bain plus long avec les risques techniques que cela entraîne, en plus du coût supérieur de traitement.

Un autre inconvénient remarqué par le demandeur consiste dans l'existence dans tout traitement d'un temps non négligeable pendant lequel la machine de traitement ne remplit pas sa fonction principale, c'est-à-dire un temps pendant laquelle elle est en quelque sorte sous-employée. Dans le cas d'un traitement textile, il s'agit notamment du temps de chargement pendant lequel le matériau textile est mis en place à l'intérieur de la cuve ainsi que le temps de déchargement pendant lequel ledit matériau est sorti de la cuve. Ce temps non réellement efficace, en terme de traitement, peut présenter une proportion importante du temps global de mise en oeuvre du processus de traitement.

Le but que s'est fixé le demandeur est de proposer une machine de traitement qui pallie les inconvénients précités.

Ce but est parfaitement atteint par la machine de traitement de l'invention dans laquelle une cuve de traitement, amovible, est raccordable par des moyens de raccordement rapide à une borne technique, fixe, comprenant au moins des moyens généraux de commande ainsi que des moyens de contrôle et des moyens d'action sur le ou les fluides de traitement, lesdits moyens d'action étant aptes à assurer la circulation du ou desdits fluides dans des conditions données de débit, pression et température, depuis une arrivée de fluide jusqu'aux moyens de raccordement à la cuve.

Ainsi, selon le concept de l'invention, tous les organes principaux qui sont généralement situés en périphérie de la cuve de traitement dans les machines classiques sont regroupés dans une borne technique fixe qui est agencée de telle sorte que grâce à des moyens de raccordement rapide une cuve de traitement amovible puisse lui être raccordée. On comprend qu'à une borne technique fixe donnée peut être raccordée non pas toujours la même cuve mais une diversité de cuves, ayant en particulier des capacités différentes.

Cette disposition particulière permet de choisir la cuve adéquate en fonction du traitement à réaliser, notamment l'importance du lot à traiter. De plus il devient possible d'effectuer les opérations autres que le traitement proprement dit, par exemple le chargement et le déchargement des matières à traiter dans des emplacements où la cuve de traitement n'est pas raccordé à la borne technique, cette dernière étant par exemple mise en oeuvre avec une autre cuve dans le cadre d'un autre traitement. On réalise donc une utilisation optimale du temps d'occupation de la borne technique fixe par temps masqué.

Avantageusement une même borne technique comporte une pluralité de moyens de raccordement rapides permettant son raccordement à plusieurs cuves de traitement simultanément. Bien sûr dans ce cas les moyens généraux de commande sont prévus pour assurer le pilotage du processus de traitement dans chacune des cuves concernées.

Ce mode de réalisation particulier permet un gain important de place dans les installations existantes et également de réduire le coût global de la machine puisque les mêmes moyens de contrôle et d'action sur le ou les fluides de traitement sont mis en oeuvre pour plusieurs cuves de traitement.

Dans le domaine de l'ennoblissement textile, les moyens d'action contenus dans la borne technique fixe comportent au moins un circuit de fluide et une pompe de circulation aptes à réaliser le remplissage, la circulation et la vidange du ou des fluides de traitement ainsi que l'apport d'additifs ; de plus les moyens de contrôle contenus dans la borne technique fixe comportent, agencés sur le circuit de fluide, des moyens de contrôle du débit du bain de traitement, de contrôle du niveau dudit bain dans la cuve, de contrôle de température, de contrôle du pH ; enfin les moyens généraux de commande comportent un circuit électronique de commande apte à piloter le processus de traitement en fonction des données provenant de différents moyens de contrôle précités et des données spécifiques de la cuve et éventuellement du traitement proprement dit.

De préférence les moyens d'action sur le ou les fluides de traitement comportent également au moins un échangeur de chaleur disposé sur le circuit de fluide entre l'arrivée du fluide et la pompe de circulation.

Eventuellement les moyens de contrôle contenus dans la borne technique fixe, concernent également le contrôle colorimétrique du bain circulant dans le cuve pendant le traitement.

S'agissant d'une machine de traitement textile dans laquelle le matériau textile est déplacé sous forme d'une boucle sans fin dans la cuve grâce à un organe de déplacement entraîné par des moyens d'entraînement, selon l'invention, l'organe de déplacement localisé dans la cuve amovible, est raccordable par des moyens de raccordement rapides aux moyens d'entraînement qui sont localisés dans la borne technique fixe et commandés par les moyens généraux de commande. Dans cette version la cuve de traitement n'est pas autonome dans la mesure où le matériau textile ne peut être déplacé à l'intérieur de ladite cuve par l'organe de déplacement sans raccordement direct à la borne technique fixe ou à un autre système d'entraînement externe.

Dans une seconde version, la cuve amovible peut être autonome. Dans ce cas l'organe de déplacement, localisé dans la cuve amovible, est entraîné par des moyens d'entraînement solidaires de ladite cuve, tandis que lesdits moyens d'entraînement sont raccordables aux moyens généraux de commande de la borne fixe. Dans ce cas il est donc possible, sur un autre emplacement, de réaliser à l'aide de la cuve amovible d'autres opérations que le traitement proprement dit piloté par les moyens généraux de commande de la borne fixe. Il peut s'agir d'opérations du type essorage.

La machine de traitement textile peut en particulier être du type barque dans laquelle la matière textile est déplacée par un organe consistant en un tourniquet, de forme elliptique, qui se trouve au-dessus du niveau du bain de traitement dans la cuve et qui est apte à provoquer le déplacement de la matière et son dépôt en forme de plis.

Dans un version préférée, une machine de traitement textile du type barque, l'organe de déplacement se présente sous la forme d'un ensemble de trois rouleaux de détour, ledit ensemble étant animé d'un déplacement alternatif, apte à réaliser la formation de plis.

De préférence, la cuve de traitement comportant un couvercle, le rouleau central de l'ensemble des trois rouleaux de détour est solidaire du couvercle tandis que les deux rouleaux les plus éloignés sont solidaires de la cuve proprement dite. Cette disposition particulière permet de faciliter l'introduction du matériau textile dans l'ensemble des trois rouleaux de détour.

Selon l'invention, la cuve est rendue amovible grâce à une pluralité de roulettes, éventuellement pivotantes ; de plus ladite cuve comporte au moins une poignée de manutention permettant d'assurer son déplacement par rapport à l'emplacement fixe de la borne technique.

Avantageusement, la machine de traitement comporte à proximité de la borne technique des rails de guidage pour les roulettes équipant la cuve amovible, lesdits rails permettant d'assurer un positionnement précis de la cuve par rapport à la borne technique lors du raccordement de ces deux éléments grâce aux moyens de raccordement rapide.

La présente invention sera mieux comprise à la lecture de la description qui va être faite d'un exemple de réalisation d'une machine de traitement textile du type barque, comportant une cuve amovible et une borne technique fixe, illustrée par le dessin annexé dans lequel :
- la figure 1 est une représentation sous forme de diagrammes de l'ensemble des constituants de la machine,
- la figure 2 est une vue schématique en perspective d'une barque de teinture composée d'une cuve amovible et d'une borne technique fixe et,
- la figure 3 est une vue schématique en coupe de l'ensemble des rouleaux d'entraînement de la matière textile dans la barque illustrée à la figure 2.

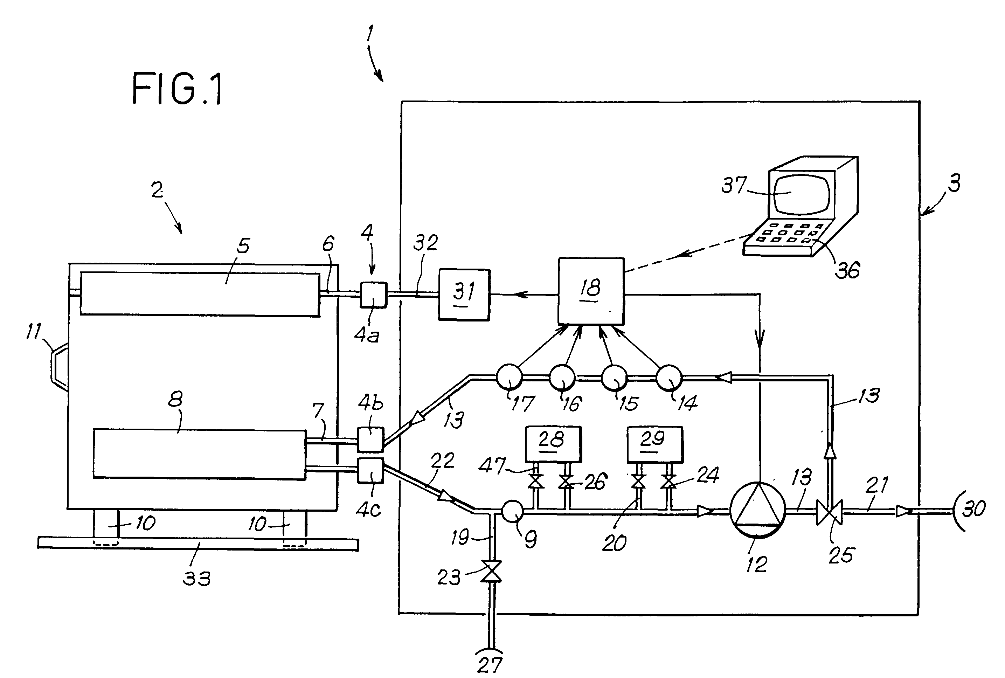

La présente invention concerne une machine de traitement qui est composée de deux éléments principaux, indépendants l'un de l'autre et raccordés par des moyens de raccordement rapide. Sur la figure 1 on a schématisé en forme de diagramme le premier élément principal qui est une cuve de traitement amovible 2, le deuxième élément principal qui est une borne technique fixe 3 et les différents moyens de raccordement rapide 4, cet ensemble constituant la machine de traitement 1 selon l'invention.

Dans l'exemple qui va maintenant être décrit à titre non exhaustif, la machine 1 est une machine de traitement textile destinée notamment à la teinture qui est dénommée barque. Dans cette machine 1 la cuve 2 comporte un organe 5 de déplacement de la matière accumulée à l'intérieur de la cuve en forme de boucle. Cet organe de déplacement 5, habituellement appelé tourniquet, a une forme elliptique telle que sa rotation autour de l'arbre 6 permet d'entraîner le matériau textile et de l'accumuler sous forme de plis selon la paroi inférieure de la cuve 2 se trouvant à l'aplomb dudit organe 5.

La cuve 2 comporte des moyens 8 de circulation interne du bain de traitement par exemple des rampes de pulvérisation.

Tous les organes internes de la cuve de traitement, à savoir l'organe d'entraînement 5, les moyens de circulation interne 8 du bain de traitement, et éventuellement tout autre organe approprié, débouchent sur l'extérieur de la cuve 2, de façon étanche, par une liaison qui est apte à coopérer avec les moyens de raccordement adaptés respectivement 4a pour l'organe d'entraînement 5 et, 4b et 4c pour les conduits d'entrée 7 et de sortie 7' des moyens de circulation interne 8. La cuve 2 est supportée par des roulettes 10 et comporte une ou plusieurs poignées 11 de telle sorte que l'opérateur peut réaliser le déplacement de la cuve amovible 2, lorsque ladite cuve 2 n'est pas reliée à la borne technique fixe 3 grâce aux moyens de raccordement 4.

On dénomme sous le terme borne technique 3, dans le cadre du présent texte, une structure indépendante et fixe qui contient une pluralité d'organes, eux-mêmes débouchant sur l'extérieur de manière à être reliés à la cuve de traitement 2 par les moyens de raccordement rapide 4. Dans le cas d'une barque textile, les organes doivent assurer l'alimentation et l'évacuation du bain de traitement dans des conditions de débit, de température et de pH appropriées en fonction du processus de teinture ; ils doivent assurer également l'entraînement de l'organe 5 de déplacement.

Concernant la circulation du bain de traitement, la borne 3 contient une pompe 12, de préférence à débit variable et à double sens de passage du fluide, dont d'une part le canal de refoulement est prolongé par une canalisation 13 débouchant vers l'extérieur de la borne 3 jusqu'aux moyens de raccordement 4b et d'autre part le canal d'aspiration est prolongé par une canalisation 22 débouchant vers l'extérieur de la borne 3 jusqu'aux moyens de raccordement 4c. Sur la canalisation 13 de refoulement sont agencés différents systèmes de contrôle : contrôle de température 14, contrôle de pH 15, contrôle de débit 16 et contrôle de colorimétrie 17. Sur la canalisation d'aspiration est agencé un système de contrôle de niveau 9. Chaque système de contrôle 9, 14 , 15, 16, 17 est connecté à un circuit électronique de commande 18 du type automate programmable, processeur ou microprocesseur, vers lequel sont transférées les données relatives aux différents paramètres concernés : température, pH, débit, données colorimétriques, niveau.

En plus des canalisations d'aspiration 22 et de refoulement 13, le circuit de fluide comporte un ensemble d'autres canalisations débouchant éventuellement vers l'extérieur de la borne fixe 3. Une première canalisation 19 munie d'une vanne 23 est raccordée à une source de fluide 27 et débouche dans la canalisation d'aspiration 22 ; deux deuxièmes canalisations 20, munies de vannes 24 relient une cuve 29 d'additifs à la canalisation d'aspiration 22 ; deux troisièmes canalisations 47, munies de vannes 26, relient un échangeur de chaleur 28 à la canalisation d'aspiration 22 ; une quatrième canalisation 21 est raccordée à un égout 30 et débouche dans la canalisation de refoulement 13 au niveau d'une vanne trois voies 25. Toutes les vannes 23 à 26 sont connectées au circuit électronique de commande 18.

L'échangeur de chaleur 28 est apte à porter le fluide circulant dans la canalisation d'aspiration 22 à la température adaptée. L'ajout d'additifs peut aussi être obtenu soit à partir de la cuve de préparation 29 soit à partir d'une dérivation de la canalisation 22 d'aspiration en sorte de permettre la dilution de l'additif avec le bain en cours de circulation.

La borne technique fixe 3 comporte également un moteur d'entraînement 31 apte à entraîner en rotation un arbre 32 qui grâce aux moyens de raccordement 4a peut entraîner l'organe de déplacement 5. Ce moteur 31 est lui même connecté au circuit électronique de commande 18.

La borne technique fixe 3 contient enfin un clavier 36 et un écran de visualisation 37 permettant à l'opérateur d'entrer toutes informations utiles concernant les particularités du traitement à effectuer. En premier lieu il s'agit d'entrer les paramètres relatifs à la cuve de traitement 2 qui est raccordée à la borne 3, puisque conformément à la caractéristique principale de l'invention, différentes cuves 2 peuvent être raccordées à une même borne 3. Les autres paramètres consisteront principalement dans les données relatives au matériau à teindre, et éventuellement au processus de teinture sélectionné. Bien sûr le circuit 18 aura préalablement été programmé de telle sorte qu'il puisse piloter le processus de teinture et les conditions de fonctionnement de la cuve 2, en fonction des données recueillies d'une part au niveau du clavier 36 et d'autre part au niveau des différents systèmes de contrôle 9 et 14 à 17. Ce pilotage intervient par ouverture et fermeture des vannes 23 à 26 sur les différentes canalisation et commande du moteur d'entraînement 31 de manière à respecter les conditions préprogrammées rentrées dans le circuit électronique de commande 18 pour le processus de traitement sélectionné.

Il est à noter que les informations relatives au processus de traitement peuvent également être entrées dans un circuit électronique externe, auquel sont raccordées toutes les bornes techniques de l'atelier. Dans ce cas, le clavier 36 permet à l'opérateur de dialoguer avec le circuit interne 18, qui aura été préalablement chargé par le circuit externe.

La même pompe 12 à double sens de circulation sert avantageusement à l'ensemble des opérations concernant le bain de traitement : remplissage, circulation du bain dans la cuve 2 et vidange. On peut bien sûr prévoir plusieurs pompes de circulation à un seul sens de fonctionnement, l'une réalisant le remplissage et l'autre la vidange.

Les moyens de raccordement rapide 4 sont conçus pour réaliser une jonction parfaite de la cuve 2 et de la borne 3, sans altérer le fonctionnement des organes raccordés.

Afin de faciliter à l'opérateur le positionnement approprié de la cuve amovible 2 par rapport à la borne fixe 3, des rails de guidage 33 sont disposés sur le sol à proximité de la borne technique fixe 3. Ainsi il suffit à l'opérateur de positionner la cuve 2 de manière à ce que les roues 10 soient calées par rapport aux rails de guidage 33, à déplacer ladite cuve 2 grâce à la poignée 11 ou éventuellement à un chariot de déplacement jusqu'à ce que les portions extérieures des organes à raccorder soient en contact l'une avec l'autre au niveau des moyens de raccordement 4a à 4c, et à actionner lesdits moyens de raccordement 4 de manière à réaliser la jonction entre la cuve 2 et la borne 3.

D'autres modes de guidage de la cuve 2 sont envisageables, tels que le filoguidage ou encore un guidage à l'aide de glissières convergentes, formant entonnoir pour le positionnement précis d'une roulette pivotante fixée sous la cuve.

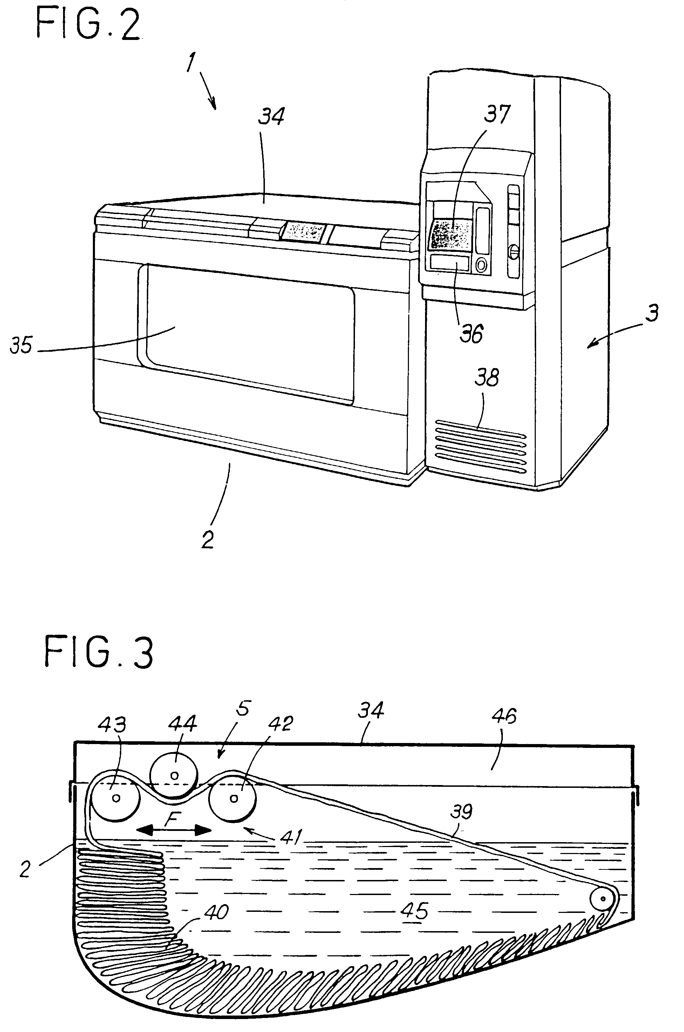

Dans la représentation qui est illustrée à la figure 2, la cuve de traitement 2 comporte un couvercle 34 pivotable par vérin hydraulique non représenté, ainsi qu'un hublot frontal 35.

Quant à la borne technique fixe 3, on a représenté sur la figure 2 le clavier 36, l'écran 37 et également des bouches de passage d'air 38, permettant la ventilation de la borne 3.

Comparativement aux barques de teinture classique, celle qui est illustrée à la figure 3 comporte un organe 5 de déplacement de la matière textile 39 et de formation des plis 40 qui n'a pas la forme traditionnelle d'un tourniquet de section elliptique. Cet organe de déplacement 5 consiste en un ensemble 41 de trois rouleaux de détour respectivement un rouleau amont 42, un rouleau aval 43 et un rouleau intermédiaire 44. Ces trois rouleaux sont entraînés en rotation à la même vitesse périphérique et sont disposés en sorte de former un embarrage dans lequel la matière textile a un parcours en S, en contact obligatoire avec une portion angulaire de chacun des rouleaux. La surface extérieure de chaque rouleau 42, 43, 44 présente un coefficient de frottement suffisant pour que l'application du matériau textile 39 sur cette surface provoque l'entraînement de celui-ci sans glissement.

L'ensemble 41 des trois rouleaux de détour est animé d'un mouvement alternatif, selon la flèche F, dont l'amplitude détermine la largeur des plis 40, formés dans le bain 45.

Le rouleau de détour intermédiaire 44 est de préférence solidaire du couvercle 34, tandis que les deux rouleaux de détour amont 42 et aval 43 sont solidaires de la cuve de traitement 2 proprement dite. Cette disposition facilite le chargement du matériau textile 39 à l'intérieur de la cuve 2, puisqu'il suffit à l'opérateur de disposer ledit matériau en boucle en le faisant passer par dessus les deux rouleaux amont 42 et aval 43. Lors de la fermeture du couvercle 34, le rouleau intermédiaire 44 vient se positionner exactement par dessus la portion de matériau 39 qui s'étend entre les deux rouleaux amont 42 et aval 43.

Selon le demandeur, l'entraînement du matériau textile 39 par l'ensemble 41 de rouleaux de détour présente plusieurs avantages. D'une part, comparativement au tourniquet de section elliptique, il est possible de minimiser l'espace nécessaire pour loger l'organe 5 au-dessus du bain de teinture 45. Ainsi le volume d'air 46, séjournant au-dessus du bain de teinture 45 est plus faible dans la cuve 2 illustrée à la figure 3 que dans une barque classique. D'autre part le tourniquet de section elliptique ne peut générer que des plis ayant une largeur donnée, alors que dans le cas présent il suffit de régler la course du déplacement alternatif de l'ensemble 41de détour pour faire varier à volonté la largeur des plis 40. Enfin grâce à l'appui des surfaces de contact des trois rouleaux 42, 43, 44 sur les deux faces du matériau textile 39 il est possible d'avoir un déplacement sans glissement du matériau textile 39 et donc sans à-coup. Cet ensemble 41 de rouleaux de détour à déplacement transversal alternatif peut également être mis en oeuvre dans les barques traditionnelles, en remplacement du tourniquet à section elliptique.

La présente invention n'est pas limitée au mode de réalisation qui vient d'être décrit à titre d'exemple non exhaustif. En particulier la borne technique fixe 3 peut être prévue pour être raccordée à plusieurs cuves de traitement 2 et assurer leur pilotage simultanément. Par exemple dans le cas d'une borne technique 3 raccordable à deux cuves, les deux cuves pourraient être disposées dans le prolongement l'une de l'autre, de part et d'autre de la borne technique. D'autres dispositions sont éventuellement possibles, notamment un raccordement en T ou en étoile.

Dans ce cas, il peut être prévu que ce soit le même bain de traitement qui circule en même temps dans les deux cuves raccordées à la même borne technique. Cette disposition particulière présente l'avantage d'avoir une parfaite identité de traitement dans les deux cuves. Le même avantage peut aussi être obtenu avec deux machines selon l'invention dont les deux circuits internes de commande sont raccordées entre eux ou à un même circuit électronique de commande externe,. L'un des circuits internes dirige les opérations, l'autre se contentant de les suivre telles quelles ou éventuellement de corriger les éventuels écarts.

Par ailleurs même si la machine de traitement de l'invention trouve des applications particulièrement intéressantes dans le domaine de l'ennoblissement textile, et en particulier dans les machines du type barque, ceci n'est pas exclusif d'autres applications dans d'autres domaines que le textile.

## Revendications

1. Machine de traitement (1) dans laquelle une cuve (2) de traitement, amovible, est raccordable par des moyens de raccordement rapide (4) à une borne technique (3), fixe, comprenant au moins des moyens généraux de commande (18) ainsi que des moyens de contrôle (14 à 17) et des moyens d'action (12) du ou des fluides de traitement, lesdits moyens d'action étant aptes à assurer la circulation du ou desdits fluides dans des conditions données de débit, pression et température, depuis une arrivée de fluide jusqu'aux moyens de raccordement à la cuve.

2. Machine selon la revendication 1 caractérisée en ce qu'une même borne technique comporte une pluralité de moyens de raccordement rapides permettant son raccordement à plusieurs cuves de traitement simultanément.

3. Machine de traitement textile selon la revendication 1 caractérisée en ce que les moyens d'action contenus dans la borne technique fixe comportent au moins un circuit de fluide et une pompe de circulation (12) aptes à réaliser le remplissage, la circulation et la vidange du ou des fluides de traitement (45) ainsi que l'apport d'additifs (29), en ce que les moyens de contrôle contenus dans la borne technique fixe comportent des moyens de contrôle du débit du bain de traitement, de contrôle du niveau dudit bain dans la cuve, de contrôle de température, de contrôle du pH et en ce que les moyens généraux de commande comportent un circuit électronique (18) de commande apte à piloter le processus de traitement en fonction des données provenant de différents moyens de contrôle précités et des données spécifiques de la cuve et éventuellement du traitement proprement dit.

4. Machine selon la revendication 3 caractérisée en ce que les moyens de contrôle contenus dans la borne technique fixe, comportent des moyens de contrôle colorimétrique (17) du bain circulant dans l'une des canalisations d'aspiration (22) ou de refoulement (13) de la pompe (12).

5. Machine selon la revendication 3, dans laquelle le matériau textile (39) est déplacé sous forme d'une boucle sans fin dans la cuve (2) grâce à un organe de déplacement (5) entraîné par des moyens d'entraînement (31), caractérisée en ce que l'organe de déplacement (5) localisé dans la cuve amovible (2), est raccordable aux moyens d'entraînement (31) qui sont localisés dans la borne technique fixe (3) et commandés par les moyens généraux de commande (18).

6. Machine selon la revendication 3, dans laquelle le matériau textile (39) est déplacé sous forme d'une boucle sans fin dans la cuve (2) grâce à un organe de déplacement (5) entraîné par des moyens d'entraînement (31), caractérisée en ce que l'organe de déplacement (5), localisé dans la cuve amovible (2), est entraîné par des moyens d'entraînement solidaires de ladite cuve, tandis que lesdits moyens d'entraînement sont raccordables aux moyens généraux de commande de la borne fixe.

7. Machine de traitement textile du type barque, selon la revendication 3 caractérisé en ce que l'organe de déplacement (5) se présente sous la forme d'un ensemble (41) de trois rouleaux de détour (42, 43, 44) ledit ensemble (41) étant animé d'un mouvement alternatif, apte à réaliser la formation de plis.

8. Machine selon la revendication 7 caractérisée en ce que la cuve de traitement (2) comportant un couvercle (34), le rouleau central (44) de l'ensemble (41) des trois rouleaux de détour est solidaire du couvercle (34) tandis que les deux rouleaux amont (42) et aval (43) sont solidaires de la cuve proprement dite (2).

9. Machine selon l'une des revendications 1 ou 3 caractérisée en ce que la cuve (2) est rendue amovible grâce à une pluralité de roulettes (10), et en ce qu'elle comporte au moins une poignée de manutention (11) permettant d'assurer son déplacement par rapport à l'emplacement fixe de la borne technique (3).

10. Machine selon la revendication 9 caractérisée en ce qu'elle comporte à proximité de la borne technique (3) des rails de guidage (33) pour les roulettes (10) équipant la cuve amovible (2), lesdits rails permettant d'assurer un positionnement précis de la cuve (2) par rapport à la borne technique (3) lors du raccordement de ces deux éléments grâce aux moyens de raccordement rapide (4).

## Claims

1. A treatment machine (1) in which a removable treatment vat (2) is connectable via quick-coupling means (4) to a fixed technical installation (3) including at least general control means (18) together with monitoring means (14 to 17) and fluid drive means (12) for driving treatment fluid(s), said drive means being suitable for causing said fluid(s) to circulate under given conditions of flow rate, pressure, and temperature, from a fluid inlet to the means for coupling to the vat.

2. A machine according to claim 1, characterised in that a single technical installation includes a plurality of quick-coupling means enabling it to be connected to a plurality of treatment vats simultaneously.

3. A textile treatment machine according to claim 1, characterised in that the drive means contained in the fixed technical installation comprise at least a fluid circuit and a circulation pump (12) suitable for filling, circulating, and emptying the treatment fluid(s) (45) and also for injecting additives (29) therein, in that the monitoring means contained in the fixed technical installation include means for monitoring the flow rate of the treatment bath, for monitoring the level of said bath in the vat, for monitoring its temperature, and for monitoring its pH, and in that the general control means comprise an electronic control circuit (18) suitable for running the treatment process as a function of data coming from the various above-mentioned monitoring means and data specific to the vat and possibly also to the treatment proper.

4. A machine according to claim 3, characterised in that the monitoring means contained in the fixed technical installation include colorimetry means (17) for monitoring the color of the bath flowing in one of the intake pipes (22) or the delivery pipe (13) of the pump (12).

5. A machine according claim 3, in which the textile material (39) is displaced in the form of an endless loop inside the vat (2) by a displacement member (5) driven by drive means (31), characterised in that the displacement member (5) located in the removable vat (2) is connectable to drive means (31) located in the fixed technical installation (3) and controlled by the general control means (18).

6. A machine according to claim 3, in which the textile material (39) is displaced in the form of an endless loop inside the vat (2) by means of a displacement member (5) driven by drive means (31), characterised in that the displacement member (5) located in the removable vat (2) is driven by drive means secured to said vat, with said drive means being connectable to the general control means of the fixed installation.

7. A beck-type textile treatment machine according to claim 3, characterised in that the displacement member (5) is in the form of a set (41) of three deflector rollers (42, 43, 44), said set (41) being driven with reciprocating motion suitable for forming folds.

8. A machine according to claim 7, characterised in that the treatment vat (2) has a cover (34), the central roller (44) of the set (41) of three deflector rollers being secured to the cover (34) while both upstream and downstream rollers (42, 43) are secured to the vat proper (2).

9. A machine according to one of claims 1 or 3, characterised in that the vat (2) is made removable by means of a plurality of wheels (10), and in that it includes at least one handle (11) enabling it to be moved relative to the fixed location of the technical installation (3).

10. A machine according to claim 9, characterized in that it includes guide rails (33) in the proximity of the technical installation (3) for guiding the wheels (10) fitted to the removable vat (2), said rails enabling the vat (2) to be positioned accurately relative to the technical installation (3) while said two elements are being connected together by the quick-coupling means (4).

## Patentansprüche

1. Behandlungsmaschine (1), bei der ein abnehmbarer Behandlungsbehälter (2) über Schnellkupplungseinrichtungen (4) mit einer ortsfesten technischen Einheit (3) verbunden werden kann, die mindestens allgemeine Steuereinrichtungen (18) sowie Kontrolleinrichtungen (14 bis 17) und Betriebseinrichtungen (12) für das Behandlungsfluid oder die Behandlungsfluide aufweist, wobei die Betriebseinrichtungen den Umlauf des Fluids oder der Fluide unter gegebenen Durchsatz-, Druck- und Temperaturbedingungen von einer Fluidzufuhr bis zu den Einrichtungen zur Kupplung an den Behälter gewährleisten können.

2. Maschine nach Anspruch 1, dadurch gekennzeichnet, daß die gleiche technische Einheit mehrere Schnellkupplungseinrichtungen aufweist, die ihre gleichzeitige Verbindung mit mehreren Behandlungsbehältern ermöglichen.

3. Maschine zur Behandlung von Textilien nach Anspruch 1, dadurch gekennzeichnet, daß die in der ortsfesten technischen Einheit enthaltenen Betriebseinrichtungen mindestens einen Fluidkreislauf und eine Umlaufpumpe (12) aufweisen, die das Füllen, den Umlauf und das Ausleeren des Behandlungsfluids oder der Behandlungsfluide (45) sowie die Zufuhr von Zusatzstoffen (29) durchführen können, daß die in der ortsfesten technischen Einheit enthaltenen Kontrolleinrichtungen Einrichtungen zur Kontrolle des Durchsatzes des Behandlungsbads, zur Kontrolle des Pegels dieses Bads im Behälter, zur Kontrolle der Temperatur, zur Kontrolle des pH-Werts aufweisen, und daß die allgemeinen Steuereinrichtungen eine elektronische Steuerschaltung (18) aufweisen, die den Behandlungsprozeß in Abhängigkeit von den von verschiedenen erwähnten Kontrolleinrichtungen stammenden Daten und den spezifischen Daten des Behälters und ggf. der eigentlichen Behandlung steuern können.

4. Maschine nach Anspruch 3, dadurch gekennzeichnet, daß die in der ortsfesten technischen Einheit enthaltenen Kontrolleinrichtungen Einrichtungen zur kolorimetrischen Kontrolle (17) des in einer der Ansaugleitungen (22) oder der Ausstoßleitungen (13) der Pumpe (12) fließenden Bads aufweisen.

5. Maschine nach Anspruch 3, bei der das textile Material (39) in Form einer Endlosschleife im Behälter (2) mit Hilfe eines Bewegungsbauteils (5) bewegt wird, das von Antriebseinrichtungen (31) angetrieben wird, dadurch gekennzeichnet, daß das im abnehmbaren Behälter (2) angeordnete Bewegungsbauteil (5) an die Antriebseinrichtungen (31) angeschlossen werden kann, die sich in der ortsfesten technischen Einheit (3) befinden und von den allgemeinen Steuereinrichtungen (18) gesteuert werden.

6. Maschine nach Anspruch 3, bei der das textile Material (39) in Form einer Endlosschleife im Behälter (2) mit Hilfe eines Bewegungsbauteils (5) bewegt wird, das von Antriebseinrichtungen (31) angetrieben wird, dadurch gekennzeichnet, daß das in dem abnehmbaren Behälter (2) befindliche Bewegungsbauteil (5) von mit dem Behälter fest verbundenen Antriebseinrichtungen angetrieben wird, während die Antriebseinrichtungen an die allgemeinen Steuereinrichtungen der ortsfesten Einheit anschließbar sind.

7. Textilbehandlungsmaschine der Art Kufe nach Anspruch 3, dadurch gekennzeichnet, daß das Bewegungsbauteil (5) die Form eines Satzes (41) von drei Umlenkrollen (42, 43, 44) hat, wobei dieser Satz (41) mit einer Wechselbewegung angetrieben wird, durch die Falten gebildet werden können.

8. Maschine nach Anspruch 7, dadurch gekennzeichnet, daß bei einem einen Deckel (34) aufweisenden Behandlungsbehälter (2) die zentrale Rolle (44) des Satzes (41) von drei Umlenkrollen fest mit dem Deckel (34) verbunden ist, während die vordere (42) und die hintere Rolle (43) fest mit dem eigentlichen Behälter (2) verbunden sind.

9. Maschine nach einem der Ansprüche 1 oder 3, dadurch gekennzeichnet, daß der Behälter (2) mit Hilfe mehrerer Fußröllchen (10) abnehmbar gemacht wird, und daß er mindestens einen Handgriff (11) aufweist, der seine Bewegung in Bezug auf die ortsfeste Anordnung der technischen Einheit (3) gewährleisten kann.

10. Maschine nach Anspruch 9, dadurch gekennzeichnet, daß sie in der Nähe der technischen Einheit (3) Führungsschienen (33) für die zum abnehmbaren Behälter (2) gehörenden Fußröllchen (10) aufweist, wobei diese Schienen eine präzise Positionierung des Behälters (2) in Bezug auf die technische Einheit (3) bei der Verbindung dieser beiden Elemente mit Hilfe der Schnellkupplungseinrichtungen (4) gewährleisten.
